# EUROPÄISCHE PATENTSCHRIFT

(11) **EP 3 278 067 B1**
(45) Veröffentlichungstag und Bekanntmachung des Hinweises auf die Patenterteilung: **06.05.2020**
(21) Anmeldenummer: 15713760.5
(22) Anmeldetag: 01.04.2015
(51) Int. Cl.: G01F 23/284, G01S 13/88, G01S 13/89, G01S 7/03, H01Q 1/22, H01Q 3/04, H01Q 21/06, H01Q 21/08

(54) **FÜLLSTANDMESSGERÄT UND VERFAHREN ZUR BESTIMMUNG EINER TOPOLOGIE EINER FÜLLGUTOBERFLÄCHE**
LEVEL METER AND METHOD FOR DETERMINING THE TOPOLOGY OF A FILLING SURFACE
COMPTEUR DE NIVEAU ET PROCEDE DE DETERMINATION DE LA TOPOLOGIE D'UNE SURFACE DE REMPLISSAGE

(43) Veröffentlichungstag der Anmeldung: 07.02.2018
(73) Patentinhaber: VEGA Grieshaber KG, 77709 Wolfach (DE)
(72) Erfinder: WELLE, Roland, 77756 Hausach (DE); WÄLDE, Steffen, 78078 Niedereschach (DE); GRIESSBAUM, Karl, 77796 Mühlenbach (DE)
(74) Vertreter: Maiwald Patent- und Rechtsanwaltsgesellschaft mbH
(86) Internationale Anmeldenummer: PCT/EP2015/057236
(87) Internationale Veröffentlichungsnummer: WO 2016/155822

(56) Entgegenhaltungen:
- WO-A1-2010/144936
- DE-A1- 10 149 851
- DE-A1-102004 041 857
- DE-A1-102012 106 938

## Beschreibung

### Gebiet der Erfindung

Die Erfindung betrifft Füllstandmessgeräte und Verfahren zur Bestimmung des Füllstands eines Füll- oder Schüttgutes in einem Behälter. Insbesondere betrifft die Erfindung Füllstandmessgeräte aufweisend Antennenanordnungen zur Erfassung der dreidimensionalen Oberflächentopologie eines Füll- oder Schüttguts mittels eines elektromagnetischen Signals und ein entsprechendes Berechnungsverfahren zur Ermittlung des Füllstandes, des Volumens oder der Masse des Füll- oder Schüttgutes, ein Programmelement und ein computerlesbares Medium.

### Hintergrund

Zur Bestimmung des Füllstandes eines Füll- oder Schüttgutes in einem Behälter können topologieerfassende Füllstandmessgeräte verwendet werden, die die Füllgut- oder Schüttgutoberfläche mit einem elektromagnetischen Signal abtasten und die die daraus abgeleitete Kenntnis der dreidimensionalen Oberflächentopologie des Füll- oder Schüttgutes weiter ausnutzen können, um unter Annahme einer bekannten Fläche unterhalb des Füllgutes das Volumen des Füllgutes bzw. bei bekannter Dichte die Masse oder weitere, daraus abzuleitende Größen zu ermitteln.

Derartige Füllstandmessgeräte weisen eine Antennenanordnung auf, die mittels einer Antennenhalterung mit einer Steuerungs- und Auswerteeinheit verbunden ist. Die Antennenanordnung besitzt mehrere Sende- und Empfangselemente, im Folgenden auch generisch als "Elemente" bezeichnet. Ein von den Sendeelementen abgestrahltes elektromagnetisches Messsignal wird an der Füllgutoberfläche reflektiert und von den Empfangselementen registriert. Dabei sind die Füllstandmessgeräte so ausgelegt, dass das reflektierte Messsignal aus unterschiedlichen Winkelbereichen registriert werden kann.

Beispielsweise kann eine Dimensionierung einer Antennenanordnung für ein Füllstandmessgerät im Falle einer planaren Antennenanordnung etwa 20 x 20 Elemente aufweisen. Sind die Elemente derart ausgelegt, dass sie jeweils einzeln angesteuert und ausgelesen werden können, bedeutet dies sowohl einen großen Hardware- als auch einen erheblichen Software-Aufwand. Ein einzelnes Ansteuern und Auswerten der Elemente eines beispielsweise planaren zweidimensionalen Antennenarrays ermöglicht es zum Beispiel, aus den an der Füllgut- oder Schüttgutoberfläche reflektierten Messsignalen, ohne ein mechanisches Verstellen der Antennenanordnung, eine dreidimensionale Oberflächentopologie zu ermitteln.

WO 2010/144936 A1 beschreibt ein Verfahren und eine Vorrichtung zur Berechnung einer Oberfläche eines Füllguts eines Behälters mittels der elektromagnetischen Signale mehrerer Antennen.

DE 10 2012 106 938 A1 beschreibt die abbildende Erfassung eines Radargesichtsfelds in der Prozessautomatisierungstechnik mit einer Mehrzahl von Hornantennenelementen.

DE 101 49 851 A1 beschreibt eine Vorrichtung zur Bestimmung eines Füllstandes eines Füllguts in einem Behälter, wobei mehrere Sende- und/oder Empfangselemente zu Funktionsblöcken zusammengeschlossen sind.

### Zusammenfassung der Erfindung

Es ist eine Aufgabe der Erfindung, den Aufwand bei der Topologieerfassung einer Füllgutoberfläche zu reduzieren.

Diese Aufgabe wird durch die Gegenstände der unabhängigen Ansprüche 1 und 10-12 gelöst.

Weitere Ausführungsformen der Erfindung ergeben sich aus den abhängigen Ansprüchen 2-9 und aus der folgenden Beschreibung.

Aus Gründen der besseren Lesbarkeit bezieht sich der Text im Folgenden auf den Fall von Füllgut in einem Behälter. Es versteht sich jedoch, dass sich die Erfindung sowie die zugehörigen Anwendungsbeispiele genauso auf den Fall von Schüttgut beziehen können. In ähnlicher Weise muss sich das Füll- oder Schüttgut nicht notwendig in einem Behälter befinden. Beispielsweise kann es sich auch um Schüttgut auf einem Förderband handeln. In diesem Fall ist das Füllstandmessgerät mit der Antennenanordnung an einer Stelle oberhalb des Förderbandes angebracht. Darüber hinaus kann das erfindungsgemäße Messgerät für die Bestimmung der Oberflächenkontur einer sich bewegenden Flüssigkeit verwendet werden.

Weiter wird der Begriff "Elemente" im Folgenden verwendet, um sich auf die Sendeelemente und/oder die Empfangselemente einer Antennenanordnung zu beziehen.

Gemäß einem Aspekt der Erfindung wird ein Füllstandmessgerät aufweisend eine Antennenanordnung zur Erfassung einer Topologie einer Füllgutoberfläche durch Abtasten der Oberfläche mit einem elektromagnetischen Signal vorgeschlagen. Die Antennenanordnung weist dabei eine Vielzahl von Elementen auf, welche zum Senden und/oder Empfangen des elektromagnetischen Messsignals ausgeführt sind. Die Abstände zwischen benachbarten Elementen sind dabei nicht äquidistant. Beispielsweise kann der minimale Abstand zwischen zwei benachbarten Elementen kleiner oder gleich einer halben Wellenlänge des verwendeten elektromagnetischen Messsignals sein.

Unter dem Abtasten der Oberfläche mit einem elektromagnetischen Messsignal ist das Aussenden eines elektromagnetischen Signals durch zumindest ein Sendeelement der Antennenanordnung zu verstehen, sowie das anschließende Aufzeichnen des an der Füllgutoberfläche reflektierten elektromagnetischen Messsignals durch die Empfangselemente und die anschließende Auswertung des registrierten Messsignals durch die Auswerteeinheit des Füllstandmessgerätes. Dabei ist die Antennenanordnung derart konzipiert, dass die gesamte Oberfläche des Füllgutes durch das elektromagnetische Signal erfasst werden kann. Dies kann auf der einen Seite dadurch realisiert sein, dass die Elemente in unterschiedliche Winkelbereiche abstrahlen und aus unterschiedlichen Winkelbereichen reflektierte Messsignale empfangen können, und zusätzlich kann vorgesehen sein, dass die Antennenanordnung als solche an einer Antennenhalterung angebracht ist, die eine Rotation oder Translation der Antennenanordnung über der Füllgutoberfläche erlaubt.

Gemäß einem Ausführungsbeispiel der Erfindung können die nicht äquidistant angeordneten Elemente der Antennenanordnung ein eindimensionales lineares Array bilden.

Gemäß einem weiteren Ausführungsbeispiel der Erfindung sind die Elemente auf einer zweidimensionalen ebenen Fläche angeordnet. Die zweidimensionale ebene Fläche lässt sich in eine Vielzahl von gedachten Zeilen und dazu orthogonalen Spalten unterteilen, wobei benachbarte Zeilen bzw. benachbarte Spalten jeweils äquidistant zueinander sind. Gemäß einem Ausführungsbeispiel der Erfindung sind die Elemente derart auf der zweidimensionalen Trägerfläche aufgebracht, dass die Zeilen jeweils eine unterschiedliche Anzahl an Elemente aufweisen. Damit ist der Abstand jeweils benachbarter Elemente innerhalb der Zeilen nicht mehr äquidistant. Weiterhin kann vorgesehen sein, dass die Abstände zwischen benachbarten Elementen entlang einer Zeile und/oder entlang einer Spalte nicht äquidistant sind.

Gemäß einem weiteren Ausführungsbeispiel der Erfindung erfolgt die Anordnung der Elemente in der zweidimensionalen planaren Ebene derart, dass die Anzahl an Elementen in den Spalten unterschiedlich ist. Gegenüber einem konventionellen zweidimensionalen Antennenarray in einer Ebene, bei dem die Beabstandung zwischen benachbarten Elementen innerhalb einer Zeile oder innerhalb einer Spalte jeweils gleich ist, wird damit erfindungsgemäß ein ausgedünntes Antennenarray erhalten.

Gemäß einem weiteren Ausführungsbeispiel der Erfindung besitzt das planare Trägerelement für die Sende- und Empfangselemente eine Rotationssymmetrie. In diesem Fall lässt sich die zweidimensionale ebene Fläche in eine Vielzahl von gedachten Streifen aufteilen, wobei die Streifen einen gemeinsamen Schwerpunkt in der Ebene aufweisen, der mit dem Schwerpunkt der rotationssymmetrischen Fläche übereinstimmt. Die Streifen sind so angeordnet, dass, durch Rotation eines Streifens um den gemeinsamen Schwerpunkt, dieser auf einen anderen Streifen in der ebenen Fläche abgebildet wird. Jeder der Streifen kann hierbei eine unterschiedliche Anzahl an Elementen aufweisen.

Die Abstände zwischen benachbarten, nicht äquidistant angeordneten Elementen der Antennenanordnung können beispielsweise jeweils einem ganzzahligen Vielfachen der halben Wellenlänge des elektromagnetischen Sendesignals entsprechen. Das Sendesignal kann beispielsweise eine Frequenz von 79 GHz aufweisen. Dies korrespondiert zu einer Wellenlänge von ungefähr 3,8 mm in Luft.

Ein weiterer Aspekt der Erfindung betrifft ein Auswerteverfahren für das oben und/oder im Folgenden beschriebene Füllstandmessgerät. Gemäß diesem Verfahren werden die Elemente der Antennenanordnung in eine erste Teilgruppe von ersten Elementen und mindestens eine zweite Teilgruppe von zweiten Elementen aufgeteilt. Dabei weisen die Elemente der ersten Gruppe untereinander einen ersten Abstand zueinander auf und die Elemente der zweiten Gruppe weisen zueinander wiederum einen zweiten Abstand auf, der größer ist als der erste Abstand ist. Nach Abstrahlen eines elektromagnetischen Messsignals empfangen sowohl die Elemente der ersten als auch die Elemente der zweiten Gruppe das an der Füllgutoberfläche reflektierte Messsignal. Die Auswerteeinheit des Füllstandmessgerätes ist nun derart ausgeführt, dass zunächst die durch die erste Gruppe von Elementen erfassten Echokurven ausgewertet werden. Dazu wird ein bestimmter Zielwinkel festgelegt unter dem die erfassten Messsignale ausgewertet werden sollen. Bei dieser Auswertung kommen zum Beispiel Methoden der digitalen Strahlformung zum Einsatz. Anschließend werden die durch die zweite Teilgruppe von Elementen erfassten Messsignale unter demselben Zielwinkel ausgewertet. In einem zweiten Schritt ermittelt die Auswerteeinheit eine Hüllfunktion, die die Minima der gebildeten Echokurven unter dem festgelegten Zielwinkel einhüllt. Das am stärksten ausgebildete Maximum der sich ergebenden Hüllfunktion wird verwendet, um die Distanz zwischen Antenne und Topologiepunkt der Oberfläche des Füllgutes zu ermitteln. Auf diese Art und Weise wird jedem Oberflächenpunkt der Füllgutoberfläche ein durch Zielwinkel und Abstand zur Antenneneinheit gekennzeichneter Topologiepunkt zugewiesen.

Der Zielwinkel kann derart variiert werden, dass die gesamte Oberfläche des Füllgutes vermessen werden kann. Als Resultat wird damit ein Netz von Topologiepunkten, jeweils bestehend aus einem Zielwinkel und zugehöriger Distanz zwischen Antennenanordnung und entsprechendem Oberflächenpunkt des Füllgutes, erhalten, das die dreidimensionale Füllgutoberfläche charakterisiert. Ausgehend von einer bekannten Behälter-Bodenfläche lässt sich damit beispielsweise durch numerische Integration das Volumen des Füllguts ermitteln. Ist die Dichte des Füllgutes bekannt, lässt sich daraus beispielsweise auch die Masse des im Behälter befindlichen Füllgutes ermitteln.

Gemäß einem weiteren Ausführungsbeispiel der Erfindung weist das Verfahren die im Folgenden dargelegten Schritte auf.

Zunächst wird durch ein Element oder eine Vielzahl nicht äquidistant angeordneter Elemente einer Antenneneinheit eines Füllstandmessgerätes ein elektromagnetisches Messsignal in Richtung der Füllgutoberfläche abgestrahlt. Der minimale Abstand benachbarter Elemente entspricht dabei beispielsweise einer halben Wellenlänge des elektromagnetischen Messsignals in Luft. Der minimale Abstand benachbarter Elemente kann aber auch etwas größer oder kleiner als eine halbe Wellenlänge des Messignals in Luft sein.

Das an der Oberfläche des Füllgutes reflektierte Messsignal wird durch eine Vielzahl nicht äquidistant angeordneter Elemente der Antennenanordnung empfangen und aufgezeichnet.

Ein Aussenden eines Messignals und ein entsprechendes anschließendes Aufzeichnen erfolgt so lange, bis die gesamte Füllgutoberfläche, oder ein relevanter Bereich der Füllgutoberfläche, abgetastet worden ist.

Dazu kann es vorgesehen sein, dass die Antennenanordnung zwischen einem erneuten Aussenden und Empfangen mechanisch verstellt wird. Dies ist zum Beispiel bei Antennen mit einer eindimensionalen linearen Anordnung der Elemente der Fall, bei denen die Hauptstrahlrichtung elektronisch entlang nur einer Achse variiert werden kann. Durch eine solche elektronische Steuerung kann ein bestimmter Bereich der Füllgutoberfläche, beispielweise ein schmaler Streifen, abgetastet werden. Es kann in diesem Fall aber beispielsweise nicht ein solcher Bereich der Füllgutoberfläche erfasst werden, der entlang einer Achse verläuft, die orthogonal zu dem abtastbaren schmalen Streifen in der Ebene der Füllgutoberfläche angeordnet ist. Durch ein mechanisches Verstellen, d.h. zum Beispiel durch Drehen oder Verkippen, der Antennenanordnung, kann die Hauptstrahlrichtung eindimensionaler linearer Antennenanordnungen schrittweise derart variiert werden, dass nach Durchführung einer bestimmten Schrittzahl die gesamte dreidimensionale Oberflächentopologie durch das Antennen-Messsignal erfasst werden kann.

Bei Verwendung von Antennen mit zweidimensionalen Arrays von Sende- und Empfangselementen kann ein oben beschriebenes mechanisches Verstellen der Antennenanordnung überflüssig sein.

In einem nächsten Schritt des Verfahrens zur Bestimmung der dreidimensionalen Oberflächentopologie einer Füllgutoberfläche werden die empfangenen Echokurven durch eine Auswerteeinheit des Füllstandmessgerätes ausgewertet. Dabei kann das Verfahren der Minimumsummation zum Einsatz kommen. Bei diesem Verfahren werden zunächst die Echokurven, die unter einem bestimmten Zielwinkel durch eine erste Teilmenge von Empfangselementen der Antennenanordnung registriert worden sind, ausgewertet, wobei die Elemente der ersten Teilmenge dadurch charakterisiert sind, dass sie zueinander einen konstanten Abstand aufweisen. In ähnlicher Art und Weise werden die Echokurven, die durch eine zweite Teilmenge von untereinander äquidistanten Elementen empfangen worden sind, ausgewertet. Durch Bilden der Hüllfunktion, die bei festem Zielwinkel die Minima der ermittelten Echokurven einhüllt, lässt sich eine resultierende Echokurve ermitteln, anhand derer jedem Zielwinkel der Abstand des Füllgutes von der Antenne zugeordnet werden kann. Damit wird ein den Oberflächenpunkt charakterisierender Topologiepunkt erhalten.

Der Zielwinkel, unter dem die Auswertung der Echokurven zur Bestimmung eines entsprechenden Topologiepunktes vorgenommen wird, wird nun so lange variiert, bis die gesamte Füllgutoberfläche mit einem diskreten Netz überzogen ist, das durch Angabe der Topologiepunkte charakterisiert ist.

Die ermittelten Topologiepunkte können an einer Schnittstelle der Auswerteeinheit des Füllstandmessgerätes zur Verfügung gestellt werden.

Gemäß einem weiteren Aspekt der Erfindung ist ein Programmelement angegeben, das, wenn es auf einem Prozessor eines Füllstandmessgerätes ausgeführt wird, das Füllstandmessgerät anleitet, die oben und/oder im Folgenden beschriebenen Schritte durchzuführen: Im ersten Schritt erfolgt die Abstrahlung eines elektromagnetischen Messsignals in Richtung einer Füllgutoberfläche durch ein oder mehrere Sendeelemente einer Antenneneinheit des Füllstandmessgeräts. In einem nächsten Schritt wird das an der Oberfläche des Füllgutes reflektierte Messsignal durch eine Vielzahl von nicht äquidistant angeordneten Elementen der Antennenanordnung empfangen. Im nächsten Schritt erfolgt die Auswertung des empfangenen Signals durch eine Auswerteeinheit. In diesem Schritt wird jedem Punkt der Oberfläche ein Topologiepunkt zugewiesen, charakterisiert durch einen Zielwinkel und die Beabstandung zwischen dem Oberflächenpunkt und der Antenne. Durch Variation des Zielwinkels kann so ein Netz von Topologiepunkten ermittelt werden, das die Oberfläche des Füllgutes hinreichend genau überzieht. An einer Schnittstelle kann die Auswerteeinheit die ermittelten Topologiepunkte zur weiteren Berechnung zur Verfügung stellen.

Ein weiterer Aspekt der Erfindung betrifft ein computerlesbares Medium, auf dem das obige Programmelement gespeichert ist.

Im Folgenden werden Ausführungsbeispiele der Erfindung mit Bezug auf die beiliegenden Figuren detailliert beschrieben.

Kurze Beschreibung der Figuren
- Fig. 1: zeigt ein Beispiel für ein Füllstandmessgerät in einem Behälter oberhalb einer Füllgutoberfläche.
- Fig. 2A: zeigt ein Beispiel für eine Antenne mit einer eindimensionalen linearen Anordnung der Antennenelemente.
- Fig. 2B: zeigt ein zweidimensionales Antennenarray mit äquidistant angeordneten Antennenelementen.
- Fig. 3A: zeigt ein Beispiel für eine Antennenanordnung gemäß einem Ausführungsbeispiel der Erfindung mit nicht äquidistanter Anordnung der Antennenelemente.
- Fig. 3B: zeigt ein weiteres Beispiel für eine Antennenanordnung gemäß einem Ausführungsbeispiel der Erfindung, bei der die Abstände zwischen benachbarten Elementen mehr als zwei unterschiedliche Werte annehmen.
- Fig. 4: zeigt ein weiteres Beispiel für eine Antennenanordnung gemäß einem Ausführungsbeispiel der Erfindung mit einer eindimensionalen linearen Anordnung der Elemente, bei der die Elemente in zwei unterschiedliche Gruppen eingeteilt sind, wobei der Abstand zwischen den Elementen innerhalb einer Gruppe konstant ist und der Abstand zwischen den Elementen der zweiten Gruppe größer als der Abstand zwischen den Elementen der ersten Gruppe ist.
- Fig. 5: zeigt ein Flussdiagramm eines Auswerteverfahrens zur Bestimmung der Oberflächentopologie einer Füllgutoberfläche durch Abtasten der Oberfläche mit einem elektromagnetischen Messsignal.
- Fig. 6: zeigt ein Füllstandmessgerät gemäß einem Ausführungsbeispiel der Erfindung, mit einer Antennenanordnung und zugehöriger Auswerteeinheit.
- Fig. 7A, 7B: zeigen zwei unterschiedliche Betriebszustände einer Antennenanordnung gemäß einem Ausführungsbeispiel mit einer eindimensionalen linearen Anordnung der Elemente auf der Antenne.
- Fig. 8: zeigt ein Beispiel für eine nicht drehbar gelagerte Antennenanordnung gemäß einem Ausführungsbeispiel der Erfindung, bei der die Elemente auf einem radialsymmetrischen Träger angeordnet sind.
- Fig. 9: zeigt ein Beispiel für eine Antennenanordnung gemäß einem Ausführungsbeispiel der Erfindung, bei der die Elemente auf einem planaren rechteckigen Träger angeordnet und jeweils nicht gleich beabstandet sind.
- Fig. 10: zeigt ein Beispiel für die durch die Empfangselemente erfassten Echokurven des an der Füllgutoberfläche reflektierten Messsignals.

Die Zeichnungen sind lediglich schematisch und nicht maßstabsgetreu. Gleiche Bezugszeichen beschreiben gleiche oder ähnliche Teile.

### Detaillierte Beschreibung von Ausführungsbeispielen

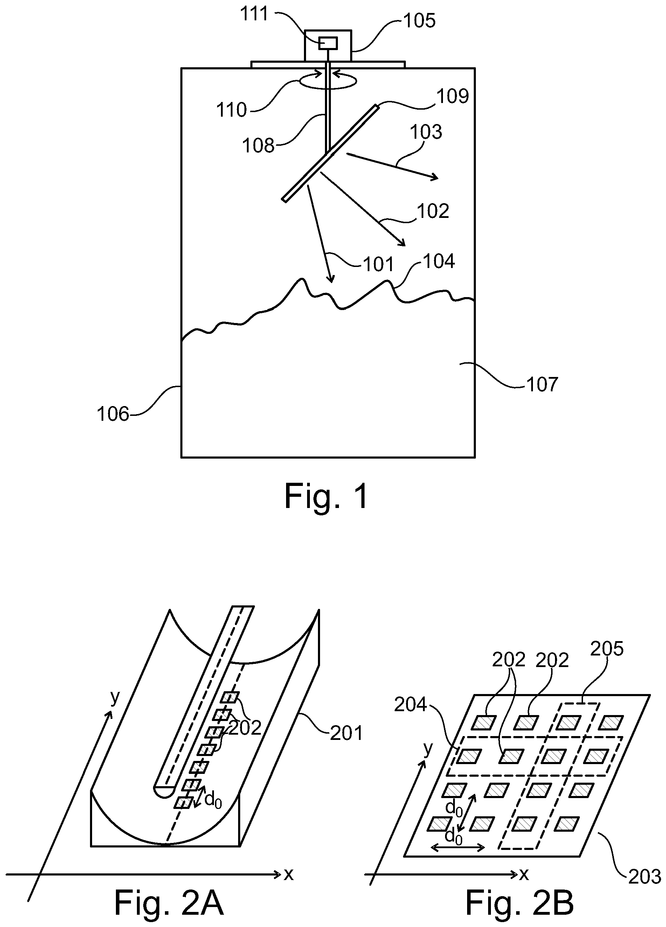

In Fig. 1 ist ein Beispiel für ein Füllstandmessgerät 105 gezeigt, das oberhalb einer Füllgutoberfläche 104 angeordnet ist. Das Füllgut befindet sich in einem Behälter 106, und weist ein Gesamtvolumen 107 innerhalb des Behälters auf. Typischerweise (aber nicht notwendigerweise) ist die Fläche des Behälters unterhalb des Füllgutes eben. Das Füllstandmessgerät 105 weist eine Antenne 109 auf, die durch eine Antennenhalterung 108 mit einer Steuerungs- und Auswerteeinheit 111 des Füllstandmessgerätes verbunden ist. Die Antenne 109 kann beispielsweise drehbar gelagert sein. Zum Beispiel kann ein mechanisches Verstellen der Hauptstrahlrichtung der Antenne durch Drehen 110 vorgesehen sein. Die auf der Antenne 109 angeordneten Antennenelemente, die zum Senden eines Messsignals dienen, sowie die Empfangselemente, die zum Empfangen eines an der Füllgutoberfläche reflektierten Messsignals dienen, können in unterschiedliche Winkelbereich 101, 102, 103 Messsignale senden bzw. Messsignale aus diesen unterschiedlichen Winkelbereichen empfangen.

Je nach Ausführungsart der Antenne besitzt diese eine bestimmte Hauptstrahlrichtung, die es zunächst nur erlaubt, einen bestimmten Teilbereich der Füllgutoberfläche abzutasten. Durch ein mechanisches Verstellen der Hauptstrahlrichtung einer solchen Antenne kann schließlich erreicht werden, dass die gesamte Füllgutoberfläche abgetastet wird. Dies kann beispielsweise im Fall von Antennen, die eine eindimensionale lineare Anordnung von Empfangs- und Sendeelementen aufweisen, notwendig sein.

Ein Beispiel für eine solche eindimensionale lineare Anordnung der Elemente ist in Fig. 2A gezeigt. In einer Parabolrinne 201 sind Elemente 202, die zum Senden und/oder Empfangen eines elektromagnetischen Messsignals dienen, angeordnet. Die Elemente 202 weisen eine konstante Beabstandung d₀ auf. Eine Anordnung gemäß Fig. 2A in einer Parabolrinne erlaubt eine Fokussierung des Messsignals in X-Richtung. Eine Fokussierung des Messsignals in Y-Richtung kann durch eine entsprechende Auswertung der von den Elementen 202 empfangenen Messsignale, unter Verwendung eines geeigneten Verfahrens der digitalen Strahlformung erreicht werden. Bei konstanter Ausrichtung der Antenne lässt sich damit ein bestimmter Teilbereich der Füllgutoberfläche abtasten. Um eine dreidimensionale Oberflächentopologie mit Hilfe einer Antennenanordnung gemäß Fig. 2A zu gewinnen, kann die Antenne beispielsweise durch mechanisches Verstellen, d.h. zum Beispiel durch Drehen, derart justiert werden, dass sukzessive unterschiedliche Teilbereiche der Füllgutoberfläche kartographiert werden. Indem die Antennenhalterung beispielsweise jeweils um einen festen Winkel um eine durch die Antennenhalterung vorgegebene Achse gedreht wird und anschließend jeweils ein Messsignal ausgesendet und empfangen wird, kann erreicht werden, dass beispielsweise nach einer Drehung um insgesamt 360° die gesamte Oberfläche des Füllgutes abgetastet worden ist.

Fig. 2B zeigt ein Beispiel für eine Antennenanordnung, bei der ein mechanisches Verstellen der Antenne nicht notwendig ist, um die gesamte Füllgutoberfläche abzutasten. Die Antennenelemente 202 sind auf einem planaren Träger 203 angeordnet. Benachbarte Elemente 202 weisen in X- und Y-Richtung jeweils einen konstanten Abstand d₀ zueinander auf. Der planare Träger 203 lässt sich in gedachte Zeilen 204 und gedachte Spalten 205 aufteilen, wobei Zeilen und Spalten jeweils orthogonal zueinander angeordnet sind und benachbarte Zeilen oder benachbarte Spalten jeweils äquidistant zueinander sind. Die Position eines Elementes 202 auf dem planaren Träger 203 lässt sich demnach durch Angabe der Zeilen- und Spaltenposition eindeutig angeben. Um eine dreidimensionale Oberflächentopologie der Füllgutoberfläche erhalten zu können, kann vorgesehen sein, dass die Elemente 202 jeweils einzeln angesteuert und jeweils einzeln ausgelesen werden können.

Zum Beispiel kann eine Dimensionierung eines solchen zweidimensionalen Antennenarrays 20 x 20 Strahl- bzw. Empfangselemente aufweisen. Im Falle einer Messsignal-Frequenz von 79 GHz resultiert eine Wellenlänge von ungefähr 3.8 mm in Luft, so dass die Ausdehnung einer planaren Antennenanordnung in X- bzw. Y-Richtung von der Größenordnung von ungefähr 4 cm ist.

Der Hardware-Aufwand für ein solches zweidimensionales Antennenarray, bei dem jedes der ungefähr 400 Elemente 202 separat angesteuert und ausgelesen wird, ist sehr groß. Auch der Softwareaufwand bei der Auswertung des durch Elemente 202 empfangenen Messsignals ist erheblich, da zunächst die Signale jedes einzelnen Elementes 202 ausgewertet und anschließend mit den übrigen Signalen der übrigen Elemente verrechnet werden müssen.

Eine Aufgabe der Erfindung ist es, den Hardware- und Softwareaufwand bei der Erfassung einer dreidimensionalen Oberflächentopologie durch eine Antennenanordnung zu reduzieren.

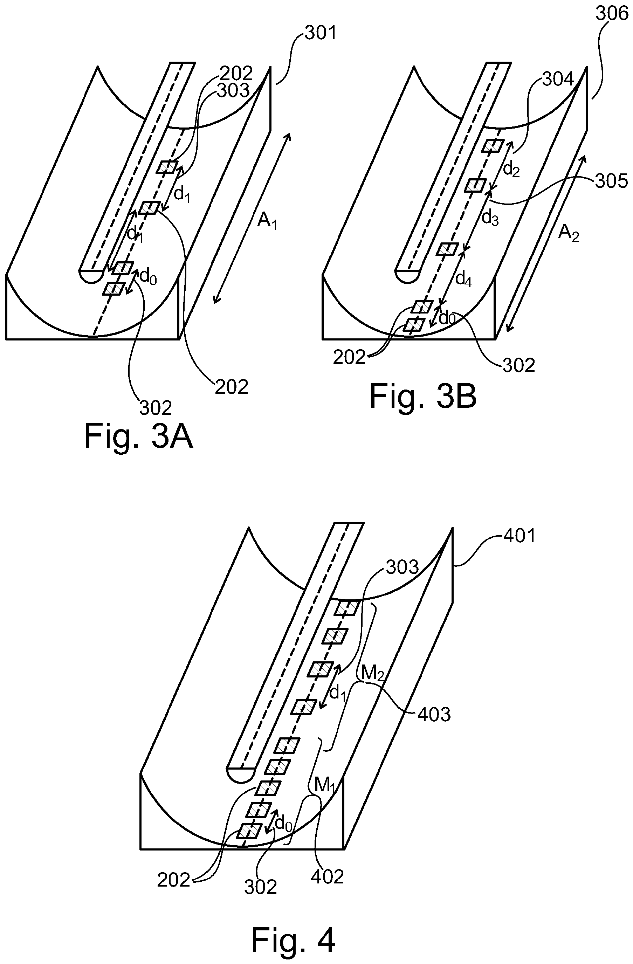

Fig. 3A zeigt dazu eine weitere Antennenanordnung zur Topologiebestimmung bei der Füllstandmessung. Die Antenne 301 weist eine Parabolrinne, in der Elemente 202 angeordnet sind, auf, wobei benachbarte Elemente einen minimalen Abstand d₀, 302, oder einen größeren Abstand d₁, 303, entlang der eindimensionalen linearen Ausrichtung der Elemente aufweisen können.

Fig. 3B zeigt ein weiteres Ausführungsbeispiel für eine Antennenanordnung, 306, wobei wiederum eine Parabolrinne gezeigt ist, in der die Antennenelemente 202 eine Vielzahl unterschiedlicher Beabstandungen d₀, 302, d₂, 304, d₃, 305, zueinander aufweisen können.

Die Anzahl der unterschiedlichen Beabstandungen in Fig. 3B ist beispielhaft. Insbesondere ist die Erfindung nicht auf die dargestellte Anzahl unterschiedlicher Beabstandungen beschränkt.

Im Vergleich zu der Antenne in Fig. 2A zeigen die Ausführungsbeispiele in Fig. 3A und Fig. 3B ausgedünnte Anordnungen der Elemente 202. Damit kann sowohl der Hardware-Aufwand als auch anschließend der Aufwand bei der Auswertung der empfangenen Messsignale reduziert werden.

In Fig. 4 ist ein weiteres Ausführungsbeispiel für eine Antennenanordnung 401 gezeigt. In einer Parabolrinne sind wiederum in linearer eindimensionaler Anordnung Antennenelemente 202 angeordnet. Dabei sind diese Elemente unterteilt in eine erste Teilmenge M1, 402, und eine zweite Teilmenge M2, 403. Die Elemente der ersten Teilmenge M1, 402, weisen jeweils eine konstante Beabstandung d₀, 302, zueinander auf. Die Elemente der zweiten Teilmenge M2 weisen jeweils eine konstante Beabstandung d₁, 303, zueinander auf, die größer als die konstante Beabstandung d₀ der Elemente der ersten Teilmenge ist.

In Fig. 4 ist der Fall dargestellt, dass ein bestimmtes Element ausschließlich zu einer bestimmten Teilmenge, beispielsweise M1, gehört. Im Allgemeinen kann ein Element jedoch zu mehreren Teilmengen gehören.

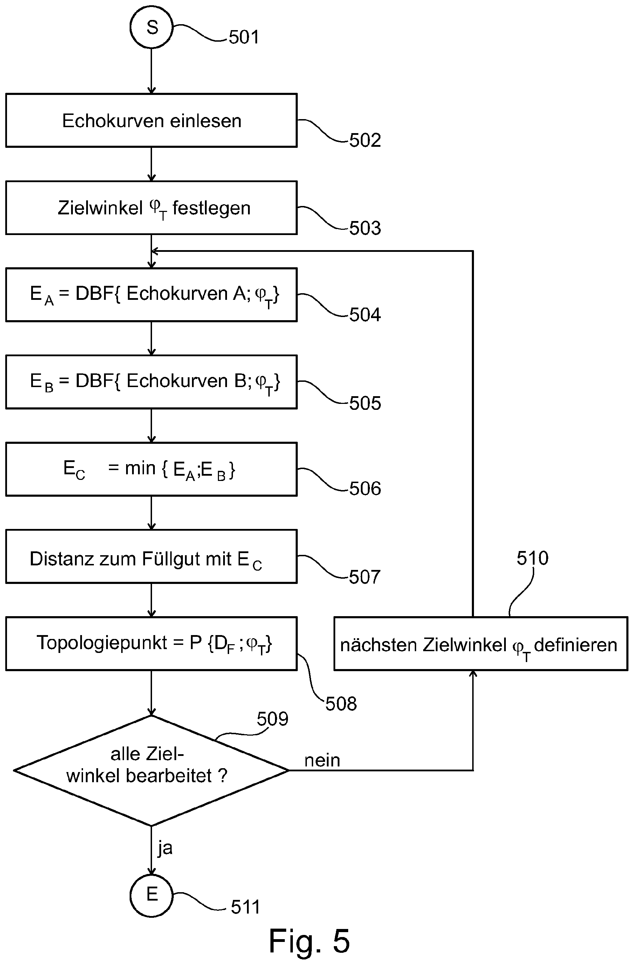

Das Flussdiagramm in Fig. 5 zeigt ein Verfahren, das zum Auswerten der Messsignale durch die in Fig. 4 beispielhaft gezeigte Antennenanordnung ausgelegt ist.

Das Verfahren beginnt mit dem Aufzeichnen des an der Füllgutoberfläche reflektierten Messsignals im Schritt 501. Die durch die Elemente 202 aufgezeichneten Messsignale werden in eine Auswerteeinheit eingelesen (Schritt 502). Im nächsten Schritt, 503, wird ein Zielwinkel ϕₜ festgelegt. Unter diesem Zielwinkel werden nun zunächst die aufgezeichneten Echokurven ausgewertet. Dazu werden zunächst im Teilschritt 504 die Echokurven derjenigen Elemente 202, die zur Teilmenge M1, 404, gehören, ausgewertet. Die Auswertung wird unter Zuhilfenahme der Methoden der digitalen Strahlformung ausgeführt. Dazu zählen beispielweise FFT, Phasenverschiebung und Summation. Die durch die zur zweiten Teilmenge M2, 403, gehörenden Elemente aufgezeichneten Echokurven werden im nächsten Teilschritt 505 in analoger Art und Weise berechnet. Sind die Elemente der Antennenanordnung in mehr als zwei Teilmengen unterteilt, so kann mit den durch die Elemente der übrigen Teilmengen aufgezeichneten Signalen analog verfahren werden.

Im Schritt 506 des Auswerteverfahrens in Fig. 5 wird nun eine Einhüllende gebildet, die die Minima der Echokurven der ersten Teilmenge und der Echokurven der zweiten Teilmenge einhüllt bzw. diesen entspricht. Aus der erhaltenen resultierenden Echokurve E_{C} kann die Distanz zum Füllgut nach bekannten Verfahren errechnet werden (Schritt 507). Damit wird einem Punkt der Füllgutoberfläche ein Topologiepunkt, zusammengesetzt aus festgelegtem Zielwinkel (Azimuthwinkel θ und/oder Elevationswinkel ϕₜ) und Distanz zwischen Antenne und Füllgut, zugeordnet. Dieser Topologiepunkt wird im Schritt 508 in einem Speicher der Auswerteeinheit hinterlegt.

Im nächsten Schritt des Auswerteverfahrens, 509, wird abgefragt, ob alle vorab definierten Zielwinkel bearbeitet sind. Ist dies nicht der Fall, wird in Schritt 510 der nächste Zielwinkel definiert und die Auswertung der Echokurven gemäß der Schritte 504 bis 508 wird für diese neuen Zielwinkel durchgeführt.

Wird in Schritt 509 festgestellt, dass alle Zielwinkel bearbeitet worden sind, so endet das Auswerteverfahren der Echokurven in Schritt 511, indem das ermittelte Netz von Topologiepunkten, die die dreidimensionale Füllgutoberfläche charakterisieren, zu einer weiteren Auswertung zur Verfügung gestellt wird. An dieser Stelle kann beispielsweise die Bestimmung des Volumens des Füllgutes im Behälter durchgeführt werden. Bei bekannter Dichte des Füllgutes ist es weiterhin möglich, abgeleitete Größen, wie beispielsweise die Masse des Füllgutes zu ermitteln.

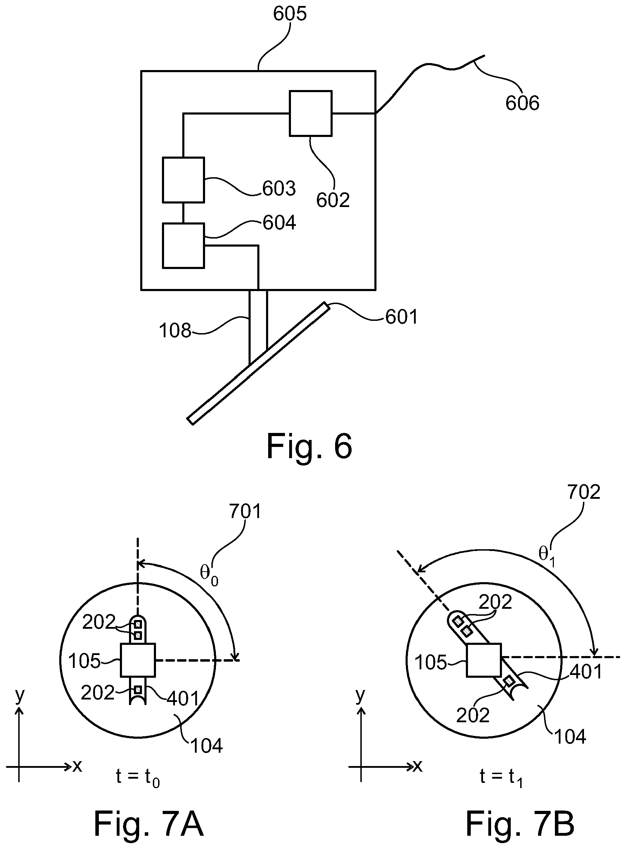

Fig. 6 zeigt ein Beispiel für ein Füllstandmessgerät, welches eine Antenne 601, die nach einem der oben beschriebenen Beispiele ausgeführt sein kann, aufweist. Durch eine Antennenhalterung 108 ist die Antenne 601 mit der Steuer- und Auswerteeinheit 602 (beispielsweise ein Mikroprozessor, DSP, FPGA oder PC) des Füllstandmessgerätes 605 verbunden. Das Füllstandmessgerät weist eine Hochfrequenzeinheit 604 auf, in der das hochfrequente, durch die Empfangselemente aufgezeichnete Messsignal in den niederfrequenten Bereich übersetzt wird. Anschließend wird das nun niederfrequente Signal in einer Analog-Digital-Einheit 603 digitalisiert und dann der Auswerteeinheit 602 zur Verfügung gestellt. Die Auswerteeinheit 602 wertet das so bereitgestellte Signal beispielsweise nach dem in Fig. 5 dargestellten Auswerteverfahren aus. Die Ausgabegrößen dieser Auswertung werden dann an einer Schnittstelle 606, bei der es sich um eine 4...20 mA Schnittstelle, eine HART-, Profibus-, Ethernet-, Bluetooth-, WLAN-, WiFi-, oder eine USB-Schnittstelle handeln kann, zur Verfügung gestellt.

Fig. 7A und B zeigen zwei Betriebszustände für eine Antennenanordnung gemäß einem Ausführungsbeispiel der Erfindung. In beiden Figuren 7A und 7B ist jeweils die Aufsicht auf die Antennenanordnung, die sich oberhalb einer Füllgutoberfläche 104 befindet, gezeigt. Als eine beispielhafte Antennenausführung ist eine Antenne 401 mit einer eindimensionalen linearen Anordnung der Elemente 202 gezeigt, die beispielsweise Teil des Messgerätes 605, das in Fig. 6 abgebildet ist, ist.

Die Elemente 202 auf der Antenne 401 sind nicht äquidistant zueinander angeordnet. Ein erster Betriebszustand ist in Fig. 7A gezeigt: zu einem Zeitpunkt t=t0 nimmt die Antenne einen festen Winkel θ₀, 701, zu einer festen Raumrichtung, in Fig. 7A der X-Achse, ein. In dieser Konfiguration werden durch die Elemente der Antennenanordnung entsprechende Messsignale ausgesandt und aufgezeichnet. Wie in Fig. 7B gezeigt, kann die Antennenanordnung zu einem späteren Zeitpunkt t=t1 einen zweiten Winkel θ₁, 702, zu der festen Achse (X-Achse) einnehmen, wobei der Winkel θ₁ größer ist als der Winkel θ₀. Durch eine entsprechende stufenweise Variation des Winkels kann die gesamte Füllgutoberfläche 104 abgescannt werden.

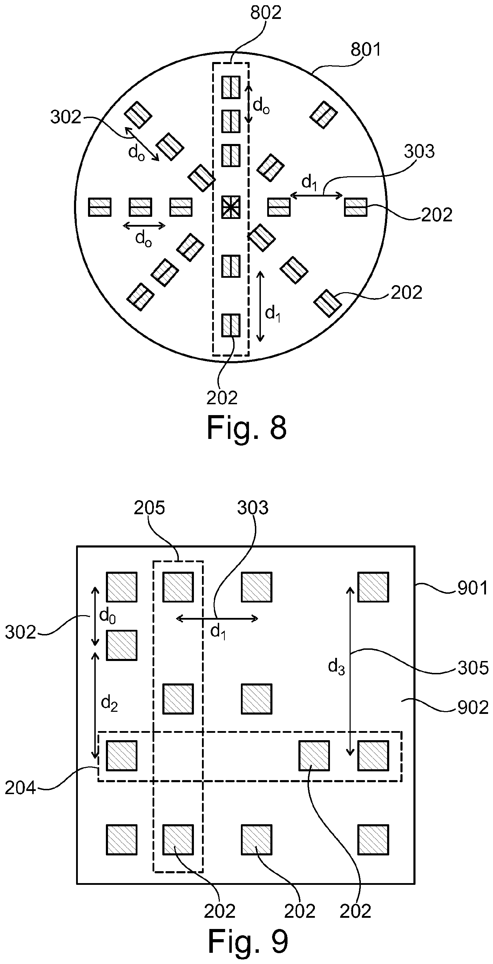

In Fig. 8 ist ein Beispiel für eine nicht drehbar gelagerte Antennenanordnung gezeigt. Auf einem planaren rotationssymmetrischen Träger 801 sind Antennenelemente 202 aufgebracht. Die rotationssymmetrische Fläche lässt sich in gedachte Streifen 802 aufteilen. Der Schwerpunkt der Streifen fällt mit dem Schwerpunkt der rotationssymmetrischen Fläche zusammen. Durch eine Rotation eines Streifens um seinen Schwerpunkt lässt sich dieser auf einen weiteren gedachten Streifen abbilden. In den gedachten Streifen 802 befindet sich jeweils eine Vielzahl von Elementen 202, wobei die Elemente zueinander keine konstante Beabstandung aufweisen. Die minimale Beabstandung d₀, 302, kann der Hälfte der Wellenlänge des verwendeten Messsignals in Luft entsprechen. Weitere Beabstandungen d₁, 303, sind größer als die minimale Beabstandung d₀. Die nicht drehbar gelagerte Antenne, die beispielhaft in Fig. 8 gezeigt ist, zeichnet sich dadurch aus, dass die Spalten 802 jeweils Elemente mit unterschiedlichen Abständen aufweisen.

Fig. 9 zeigt ein weiteres Ausführungsbeispiel einer Antennenanordnung. In diesem Fall ist ein planarer Träger 901 gezeigt, der in eine Vielzahl von gedachten Zeilen 204, die jeweils zueinander konstant beabstandet sind, und eine Vielzahl von gedachten Spalten 205, die jeweils in der gleichen Art und Weise zueinander konstant beabstandet sind, eingeteilt ist. Gemäß einem Ausführungsbeispiel der Erfindung können die Zeilen 204 jeweils eine unterschiedliche Anzahl an Elementen 202 und /oder Elemente 202 mit unterschiedlichen Abständen zwischen benachbarten Elementen enthalten. Der Abstand benachbarter Elemente innerhalb einer Zeile voneinander ist dabei minimal durch den Abstand d₀, 302, gegeben, und darüber hinaus ist eine weitere beliebige Zahl von Beabstandungen möglich. In Fig. 9 sind dazu beispielhaft die Beabstandungen d₁, 303, d₂, 304, und d₃, 305 gezeigt.

Gemäß einem Ausführungsbeispiel der Erfindung können die Abstände d₁, d₂, d₃ ganzzahligen Vielfachen der halben Wellenlänge des elektromagnetischen Messsignals entsprechen.

Typischerweise bezieht sich die Angabe der Wellenlänge auf Luft als Medium. Es ist aber auch möglich, dass sich die Antennenanordnung in einem anderen Medium, beispielsweise einer Flüssigkeit, befindet. In diesem Fall kann sich die Wellenlänge auf die Wellenlänge im entsprechenden Medium beziehen.

Gemäß einem weiteren Ausführungsbeispiel ist die Anzahl der Elemente 202 in den Spalten 205 und Zeilen 204 in Fig. 9 teilweise unterschiedlich.

In Fig. 9 ist damit ein ausgedünntes Antennenarray 902 auf einem planaren Träger 901 gezeigt, bei dem sowohl der Hardware- als auch der Softwareaufwand bei der Erfassung einer dreidimensionalen Oberflächentopologie durch Abtasten durch ein elektromagnetisches Signal gegenüber korrespondierenden Arrays mit konstanter Beabstandung der Elemente reduziert werden kann.

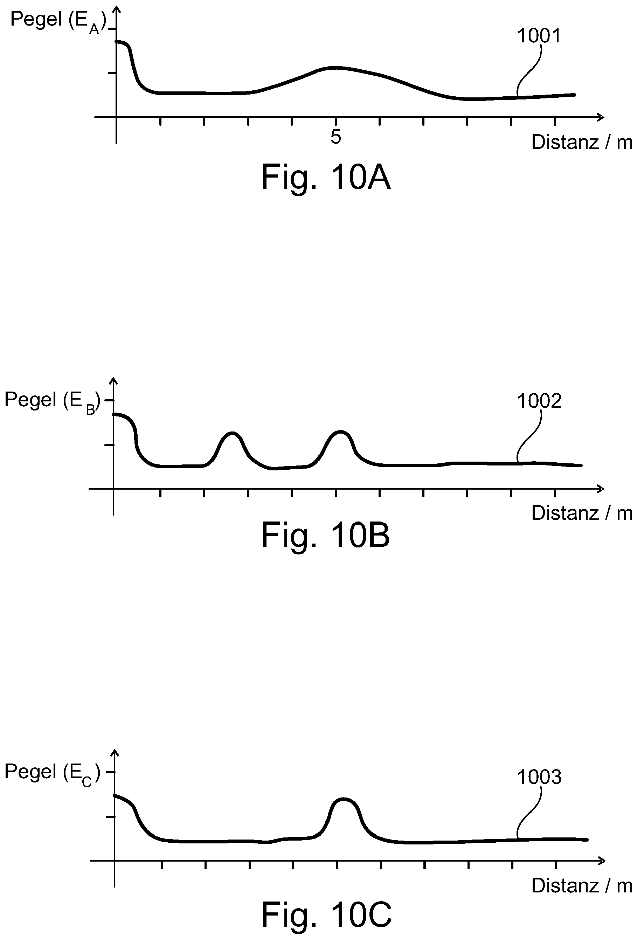

In den Fig. 10A bis 10C sind Beispiele für die gemäß dem Ablauf der Fig. 5 berechneten Echokurven E_{A}, E_{B} und E_{C} gezeigt.

Fig. 10A zeigt den Signal-Pegel 1001 der Echokurve E_{A} als eine Funktion der Distanz in Meter. Neben einem Maximum am Ursprung ist ein weiteres lokales Maximum beispielhaft bei einer Distanz von 5 Metern sichtbar. Eine solche Echokurve kann beispielsweise aus den Messkurven der Elemente 202, die zur ersten Teilgruppe M1, 402, von Elementen der Antenne 401 gehören, mit Hilfe der digitalen Strahlformung berechnet worden sein. Beispielsweise weisen diese Elemente untereinander gerade den minimalen Abstand d₀, 302, voneinander auf, der der halben Wellenlänge des Messsignals entsprechen kann.

In Fig. 10B ist der Pegel der Echokurve E_{B} als eine Funktion der Distanz in Metern, 1002, gezeigt, wie er aus den Messkurven einer zweiten Teilgruppe M2, 403, von Elementen, die untereinander einen Abstand d₁ > d₀ aufweisen, mit Hilfe der digitalen Strahlformung errechnet worden sein kann. In diesem Fall sind nicht nur ein Maximum des Pegels am Ursprung und bei einer Distanz von 5 Metern sichtbar, sondern es ist ein weiteres Nebenmaximum zwischen den vorherigen Maxima sichtbar. Derartige Nebenmaxima wie in Fig. 10B dargestellt werden in der Literatur als "grating lobes" bezeichnet, und können darauf zurückzuführen sein, dass die Beabstandung der Elemente, die zum Aufzeichnen der Messsignale der Teilgruppe M2, 403, von Elementen benutzt worden sind, größer als die halbe Wellenlänge des verwendeten elektromagnetischen Signals ist.

Fig. 10C zeigt eine Kombination 1003 der Echokurve E_{A} aus Fig. 10A und der Echokurve E_{B} aus Fig. 10B gemäß einem Ausführungsbeispiel der Erfindung. Diese resultierende Kurve entspricht gerade der Einhüllenden der Minima der beiden Echokurven 1001 aus Fig. 10A und 1002 aus Fig. 10B. Diese Kurve ergibt sich aus dem jeweiligen Minimum der Echokurve 1001 sowie der Echokurve 1002 an der gleichen Distanz. Die resultierende Echokurve 1003 in Fig. 10C weist keine Nebenmaxima auf, wie sie in Kurve 1002 in Fig. 10B auftreten. Aus dem im Vergleich zur Kurve 1001 in Fig. 10A schärferen Maximum bei einer Distanz von ungefähr 5 Metern in der beispielhaften Darstellung der Fig. 10C lässt sich schließlich die Distanz des Punktes an der Füllgutoberfläche von der Antenne bestimmen.

Dieses Verfahren ermöglicht damit eine genaue Ermittlung eines Topologiepunktes der Füllgutoberfläche, ohne dass eine Vielzahl von äquidistanten Antennenelementen notwendig ist. Durch Bilden der Hüllfunktion 1003, wie in Fig. 10C gezeigt, kann insbesondere dieselbe Distanzinformation erhalten werden, wie bei Verwendung von Antennen mit äquidistanter Beabstandung d₀ der Antennenelemente.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer, oben beschriebener Ausführungsbeispiele verwendet werden können. Bezugszeichen in den Ansprüchen sind nicht als Einschränkungen anzusehen.

## Patentansprüche

1. Füllstandmessgerät (105) aufweisend eine Antennenanordnung zur Erfassung einer Topologie einer Füllgutoberfläche (104) durch Abtasten der Oberfläche mit einem elektromagnetischen Messsignal, aufweisend:
eine Anordnung von einer Vielzahl an Elementen (202), welche zum Senden und/oder Empfangen des elektromagnetischen Messsignals ausgeführt sind;
wobei die Elemente (202) nicht äquidistant angeordnet sind;
eine Auswerteeinheit (111);
wobei die Elemente (202) der Antennenanordnung eine erste Teilgruppe an ersten Elementen (402) und eine zweite Teilgruppe an zweiten Elementen (403) aufweisen;
wobei die ersten Elemente einen ersten Abstand (302) zueinander aufweisen;
wobei die zweiten Elemente einen zweiten Abstand (303) zueinander aufweisen, der größer ist als der erste Abstand (302);
**dadurch gekennzeichnet,**
**dass** die Auswerteeinheit ausgeführt ist, aus dem von der ersten Teilgruppe unter einem bestimmten Zielwinkel erfassten Messsignal eine erste Echokurve (1001) zu bilden;
**dass** die Auswerteeinheit ausgeführt ist, aus dem von der zweiten Teilgruppe unter dem bestimmten Zielwinkel erfassten Messsignal eine zweite Echokurve (1002) zu bilden;
**dass** die Auswerteeinheit ausgeführt ist, eine Hüllfunktion (1003), die die Minima der gebildeten Echokurven unter dem Zielwinkel einhüllt, zu ermitteln;
**dass** die Auswerteeinheit ausgeführt ist, aus der Hüllfunktion einen Topologiepunkt der Füllgutoberfläche zu bestimmen.

2. Das Füllstandmessgerät nach Anspruch 1, wobei der minimale Abstand zwischen zwei benachbarten Elementen kleiner oder gleich der halben Wellenlänge des elektromagnetischen Messsignals ist.

3. Das Füllstandmessgerät nach Anspruch 1 oder Anspruch 2, wobei die Elemente (202) ein eindimensionales lineares Array bilden.

4. Das Füllstandmessgerät nach Anspruch 1 oder Anspruch 2, wobei die Elemente (202) in einer zweidimensionalen ebenen Fläche (801, 902) angeordnet sind.

5. Das Füllstandmessgerät nach Anspruch 4,
wobei die zweidimensionale ebene Fläche in eine Vielzahl von gedachten Zeilen (204) und dazu orthogonalen Spalten (205) unterteilt ist und die Position jedes Elementes in der zweidimensionalen Fläche eindeutig durch Angabe von Zeilen- und Spaltenposition bestimmt ist,
wobei die Zeilen eine unterschiedliche Anzahl an Elementen aufweisen.

6. Das Füllstandmessgerät nach Anspruch 5,
wobei die Spalten (205) eine unterschiedliche Anzahl an Elementen aufweisen.

7. Das Füllstandmessgerät nach Anspruch 4,
wobei die zweidimensionale ebene Fläche (801) in eine Vielzahl von gedachten Streifen (802) aufgeteilt ist und die Streifen einen gemeinsamen Schwerpunkt in der Ebene aufweisen,
wobei ein Streifen durch Rotation um den Schwerpunkt auf einen anderen Streifen in der ebenen Fläche abgebildet wird,
wobei die Streifen eine unterschiedliche Anzahl von Elementen (202) aufweisen.

8. Das Füllstandmessgerät nach Anspruch 1 oder Anspruch 2,
wobei die Abstände (302, 303, 304) zwischen benachbarten nicht äquidistant angeordneten Elementen jeweils einem ganzzahligen Vielfachen der halben Wellenlänge des elektromagnetischen Sendesignals entsprechen.

9. Füllstandmessgerät (105) nach einem der Ansprüche 1 bis 3,
wobei die Antennenanordnung (109) an einer Antennenhalterung (108) angebracht ist und die Antennenhalterung eine Rotationsachse (110) vorgibt,
wobei die Antennenhalterung eine Antriebseinheit aufweist,
wobei die Antriebseinheit zur Rotation um die Rotationsachse der Antennenanordnung ausgeführt ist.

10. Verfahren zur Bestimmung einer Topologie einer Oberfläche eines Füllguts oder Schüttguts, das Verfahren aufweisend die Schritte:
Abstrahlen eines elektromagnetischen Messsignals in Richtung einer Füllgut- oder Schüttgutoberfläche (104) durch eine Antenneneinheit;
Empfangen des an der Oberfläche des Füllguts oder Schüttguts reflektierten Messsignals durch eine Vielzahl nicht äquidistant angeordneter Elemente,
wobei die Elemente (202) eine erste Teilgruppe an ersten Elementen (402) und eine zweite Teilgruppe an zweiten Elementen (403) aufweisen;
wobei die ersten Elemente einen ersten Abstand (302) zueinander aufweisen;
wobei die zweiten Elemente einen zweiten Abstand (303) zueinander aufweisen, der größer ist als der erste Abstand (302);
das Verfahren ist **gekennzeichnet durch** die Schritte:
Bilden einer ersten Echokurve (1001) aus dem von der ersten Teilgruppe unter einem bestimmten Zielwinkel erfassten Messsignal **durch** eine Auswerteeinheit;
Bilden einer zweiten Echokurve (1002) aus dem von der zweiten Teilgruppe unter dem bestimmten Zielwinkel erfassten Messsignal **durch** die Auswerteeinheit;
Auswerten der empfangenen Echokurven **durch** eine Auswerteeinheit (602);
Ermitteln einer Hüllfunktion (1003), die die Minima der gebildeten ersten und zweiten Echokurven unter dem Zielwinkel einhüllt;
Bestimmung eines Topologiepunktes der Füllgutoberfläche aus der Hüllfunktion;
Berechnen der Topologie der Oberfläche und/oder mindestens eines daraus abgeleiteten Wertes;
Bereitstellen des abgeleiteten Wertes an einer Schnittstelle (601).

11. Ein Programmelement, das, wenn es auf einem Prozessor eines Füllstandmessgeräts ausgeführt wird, das Füllstandmessgerät anleitet, die Schritte nach Anspruch 10 durchzuführen.

12. Computerlesbares Medium, auf dem ein Programmelement nach Anspruch 11 gespeichert ist.

## Claims

1. Fill level measurement device (105) comprising an antenna assembly for detecting a topology of a filling material surface (104) by sampling the surface by means of an electromagnetic measurement signal, comprising:
an arrangement of a plurality of elements (202) which are configured to transmit and/or receive the electromagnetic measurement signal;
wherein the distances (302, 303) between adjacent elements are non-equidistant;
an evaluation unit (111);
wherein the elements (202) of the antenna assembly comprise a first subgroup of first elements (402) and a second subgroup of second elements (403);
wherein the first elements are at a first distance (302) from one another;
wherein the second elements are at a second distance (303) from one another, which is greater than the first distance (302);
**characterized in**
**that** the evaluation unit is configured to form a first echo curve (1001) from the measurement signal detected by the first subgroup at a particular target angle;
**that** the evaluation unit is configured to form a second echo curve (1002) from the measurement signal detected by the second subgroup at the particular target angle;
**that** the evaluation unit is configured to establish an envelope function (1003) which outlines the minima of the formed echo curves at the target angle;
**that** the evaluation unit is configured to determine a topology point of the filling material surface from the envelope function.

2. The fill level measurement device according to claim 1, wherein the minimum distance between two adjacent elements is less than or equal to one half of the wavelength of the electromagnetic measurement signal.

3. The fill level measurement device according to claim 1 or claim 2, wherein the elements (202) form a one-dimensional linear array.

4. The fill level measurement device according to claim 1 or claim 2, wherein the elements (202) that are arranged in a two-dimensional flat surface (801, 902).

5. The fill level measurement device according to claim 4,
wherein the two-dimensional flat surface is divided into a plurality of imaginary rows (204) and columns (205) orthogonal thereto, and the position of each element in the two-dimensional surface is uniquely determined by the row position and column position being defined,
wherein the rows comprise a different number of elements.

6. The fill level measurement device according to claim 5,
wherein the columns (205) comprise a different number of elements.

7. The fill level measurement device according to claim 4,
wherein the two-dimensional flat surface (801) is divided into a plurality of imaginary strips (802) and the strips comprise a common centroid in the plane,
wherein one strip is mapped onto another strip in the flat surface by being rotated about the centroid,
wherein the strips comprise a different number of elements (202).

8. The fill level measurement device according to claim 1 or claim 2,
wherein the distances (302, 303, 304) between adjacent elements that are arranged in a non-equidistant manner correspond, respectively, to an integer multiple of one half of the wavelength of the electromagnetic transmission signal.

9. The fill level measurement device (105) according to any of claims 1 to 3,
wherein the antenna assembly (109) is attached to an antenna holder (108), and the antenna holder predetermines an axis of rotation (110),
wherein the antenna support comprises a drive unit,
wherein the drive unit is configured to rotate about the axis of rotation of the antenna assembly.

10. Method for determining a topology of a surface of a filling material or bulk material, the method comprising the steps of:
emitting an electromagnetic measurement signal towards a filling material surface or bulk material surface (104) by means of an antenna unit;
receiving the measurement signal reflected by the surface of the filling material or bulk material by means of a plurality of elements that are arranged in a non-equidistant manner;
wherein the elements (202) of the antenna assembly comprise a first subgroup of first elements (402) and a second subgroup of second elements (403);
wherein the first elements are at a first distance (302) from one another;
wherein the second elements are at a second distance (303) from one another, which is greater than the first distance (302);
the method being **characterized by** the steps of:
forming a first echo curve (1001) from the measurement signal detected by the first subgroup at a particular target angle;
forming a second echo curve (1002) from the measurement signal detected by the second subgroup at the particular target angle;
evaluating the received echo curves by means of an evaluation unit (602);
establishing an envelope function (1003) which outlines the minima of the formed echo curves at the target angle;
determining a topology point of the filling material surface from the envelope function;
calculating the topology of the surface and/or at least one value derived therefrom;
providing an interface (601) with the derived value.

11. A program element which, when executed on a processor of a fill level measurement device, instructs the fill level measurement device to carry out the steps according to claim 10.

12. Computer-readable medium, on which a program element according to claim 11 is stored.

## Revendications

1. Appareil de mesure de niveau de remplissage (105) présentant un agencement d'antenne pour détecter une topologie d'une surface de produit de remplissage (104) en balayant la surface avec un signal de mesure électromagnétique, présentant :
un agencement d'une pluralité d'éléments (202) qui sont conçus pour émettre et/ou recevoir le signal de mesure électromagnétique ;
dans lequel les éléments (202) ne sont pas disposés de manière équidistante ;
une unité d'évaluation (111) ;
dans lequel les éléments (202) de l'agencement d'antenne présentent un premier sous-groupe de premiers éléments (402) et un second sous-groupe de seconds éléments (403) ;
dans lequel les premiers éléments présentent une première distance (302) les uns des autres ;
dans lequel les seconds éléments présentent une seconde distance (303) les uns des autres, qui est supérieure à la première distance (302) ;
**caractérisé en ce**
**que** l'unité d'évaluation est conçue pour former une première courbe d'écho (1001) à partir du signal de mesure détecté par le premier sous-groupe sous un angle de visée défini ;
**que** l'unité d'évaluation est conçue pour former une seconde courbe d'écho (1002) à partir du signal de mesure détecté par le second sous-groupe sous l'angle de visée défini ;
**que** l'unité d'évaluation est conçue pour déterminer une fonction enveloppe (1003) qui enveloppe les minima des courbes d'écho formées sous l'angle de visée ;
**que** l'unité d'évaluation est conçue pour déterminer un point de topologie de la surface de produit de remplissage à partir de la fonction d'enveloppe.

2. Appareil de mesure de niveau de remplissage selon la revendication 1,
dans lequel la distance minimale entre deux éléments adjacents est inférieure ou égale à la demi-longueur d'onde du signal de mesure électromagnétique.

3. Appareil de mesure de niveau de remplissage selon la revendication 1 ou la revendication 2,
dans lequel les éléments (202) forment un réseau linéaire unidimensionnel.

4. Appareil de mesure de niveau de remplissage selon la revendication 1 ou la revendication 2,
dans lequel les éléments (202) sont disposés dans une surface plane bidimensionnelle (801, 902).

5. Appareil de mesure de niveau de remplissage selon la revendication 4,
dans lequel la surface plane bidimensionnelle est divisée en une pluralité de lignes imaginaires (204) et de colonnes imaginaires (205) orthogonales à celles-ci, et la position de chaque élément dans la surface bidimensionnelle est déterminée de manière univoque en indiquant la position de la ligne et de la colonne,
dans lequel les lignes présentent un nombre différent d'éléments.

6. Appareil de mesure de niveau de remplissage selon la revendication 5,
dans lequel les colonnes (205) présentent un nombre différent d'éléments.

7. Appareil de mesure de niveau de remplissage selon la revendication 4,
dans lequel la surface plane bidimensionnelle (801) est divisée en une pluralité de bandes imaginaires (802) et les bandes présentent un centre de gravité commun dans le plan, dans lequel une bande est reproduite sur une autre bande dans la surface plane par rotation autour du centre de gravité,
dans lequel les bandes présentent un nombre différent d'éléments (202).

8. Appareil de mesure de niveau de remplissage selon la revendication 1 ou la revendication 2,
dans lequel les distances (302, 303, 304) entre des éléments adjacents non équidistants correspondent chacune à un multiple entier de la demi-longueur d'onde du signal d'émission électromagnétique.

9. Appareil de mesure de niveau de remplissage (105) selon l'une des revendications 1 à 3,
dans lequel l'agencement d'antenne (109) est monté sur un support d'antenne (108) et le support d'antenne définit un axe de rotation (110),
dans lequel le support d'antenne présente une unité d'entraînement,
dans lequel l'unité d'entraînement est conçue pour tourner autour de l'axe de rotation de l'agencement d'antenne.

10. Procédé pour déterminer une topologie d'une surface d'un produit de remplissage ou d'un produit en vrac, le procédé présentant les étapes suivantes :
émission d'un signal de mesure électromagnétique en direction de la surface d'un produit de remplissage ou d'un produit en vrac (104) par une unité d'antenne ;
réception du signal de mesure réfléchi sur la surface du produit de remplissage ou du produit en vrac par une pluralité d'éléments disposés de manière non équidistante,
dans lequel les éléments (202) présentent un premier sous-groupe de premiers éléments (402) et un second sous-groupe de seconds éléments (403) ;
dans lequel les premiers éléments présentent une première distance (302) les uns des autres ;
dans lequel les seconds éléments présentent une seconde distance (303) les uns des autres, qui est supérieure à la première distance (302) ;
le procédé étant **caractérisé par** les étapes suivantes :
formation, par une unité d'évaluation, d'une première courbe d'écho (1001) à partir du signal de mesure détecté par le premier sous-groupe sous un angle de visée défini ;
formation, par l'unité d'évaluation, d'une seconde courbe d'écho (1002) à partir du signal de mesure détecté par le second sous-groupe sous l'angle de visée défini ;
évaluation des courbes d'écho reçues par une unité d'évaluation (602) ;
détermination d'une fonction enveloppe (1003) qui enveloppe les minima des première et seconde courbes d'écho formées sous l'angle de visée ;
détermination d'un point de topologie de la surface de produit de remplissage à partir de la fonction enveloppe ;
calcul de la topologie de la surface et/ou d'au moins une valeur dérivée de celle-ci ;
fourniture de la valeur dérivée à une interface (601).

11. Élément de programme qui, lorsqu'il est exécuté sur un processeur d'un appareil de mesure de niveau de remplissage, amène l'appareil de mesure de niveau de remplissage à mettre en œuvre les étapes selon la revendication 10.

12. Support lisible par ordinateur sur lequel est stocké un élément de programme selon la revendication 11.
